Europäisches Patentamt

European Patent Office

Office européen des brevets

(11) Veröffentlichungsnummer: **0 292 960 B1**

# EUROPÄISCHE PATENTSCHRIFT

(45) Veröffentlichungstag der Patentschrift: **25.09.91**

(51) Int. Cl.5: **B60J 5/04**, B60J 1/17

(21) Anmeldenummer: **88108410.7**

(22) Anmeldetag: **26.05.88**

(54) **Kraftfahrzeugtür, insbesondere für Personenkraftwagen.**

(30) Priorität: **29.05.87 DE 3718124**

(43) Veröffentlichungstag der Anmeldung:
**30.11.88 Patentblatt 88/48**

(45) Bekanntmachung des Hinweises auf die
Patenterteilung:
**25.09.91 Patentblatt 91/39**

(84) Benannte Vertragsstaaten:
**DE ES FR GB IT**

(56) Entgegenhaltungen:
**DE-A- 2 537 536**
**DE-A- 3 405 255**
**DE-B- 2 027 241**
**GB-A- 584 702**

(73) Patentinhaber: **AUDI AG**
**Auto-Union-Strasse 1 Postfach 220**
**W-8070 Ingolstadt(DE)**

(72) Erfinder: **Hasler, Franz**
**Am Hasel 3**
**W-8071 Wettstetten(DE)**
Erfinder: **Übelstadt, M.**
**Neubaustrasse 19**
**W-8071 Wettstetten(DE)**
Erfinder: **Eggerstedt, Uwe**
**Rosenstrasse 6**
**W-8079 Walting-Gungolding(DE)**

(74) Vertreter: **Engelhardt, Harald**
**AUDI AG Patentabteilung Postfach 220**
**W-8070 Ingolstadt(DE)**

**Beschreibung**

Die Erfindung bezieht sich auf eine Kraftfahrzeugtür für Personenkraftwagen gemäß dem Oberbegriff des Anspruchs 1.

Die Türen von Personenkraftwagen werden heutzutage wahlweise als Rahmentüren oder als rahmenlose Türen gefertigt. Rahmentüren- d.h. Türen,bei welchen die Fensterscheiben von einem starren Türrahmen umgeben sind - haben dabei den Vorteil einer zufriedenstellenden Abdichtung, verringern jedoch aufgrund ihrer Breite die vom Fahrer ausgehende Rundsicht, vergrößern in unnötiger Weise das Fahrgewicht und bewirken aufgrund des Vorhandenseins zusätzlicher Kanten eine ungewünschte Vergrößerung des den Kraftstoffverbrauch beeinflussenden CW-Wertes. Bei rahmenlosen Türen hingegen, bei welchen die Türscheibe unmittelbar auf der aus Gummi bestehenden Türrahmendichtung zum Aufliegen gelangt, ergeben sich hingegen im Hinblick auf die gewünschte Abdichtung des Fahrgastraumes gewisse Schwierigkeiten, wobei zudem durch das Heben und Senken der Scheiben aufgrund der auftretenden Reibungskräfte Verschleißerscheinungen an den Türrahmendichtungen in Kauf genommen werden müssen.

Eine gewisse Kompromißlösung ergibt sich durch ein Einsatz von Fahrzeugtüren, bei welchen die anhebbaren bzw. absenkbaren Türscheiben von einem relativ dünn dimensionierten Scheibenrahmen umgeben sind, wobei die Befestigung dieses gleichzeitig mit der Türscheibe beweglichen Scheibenrahmens beispielsweise durch Verklebung erfolgen kann. Dieser die Türscheibe tragende Scheibenrahmen ist dabei bei bekannten Konstruktionen unter Einsatz entsprechender Gleitstücke entlang einer Führungsschiene bewegbar, welche im Inneren des Türkastens angeordnet ist.

Es ist die Aufgabe der vorliegenden Erfindung,die Fahrzeugtüre der zuletzt genannten Art dahingehend weiterzubilden, daß bei Verwendung eines die jeweilige Türscheibe tragenden Scheibenrahmens auf eine innerhalb des Türkastens anzuordnende Führungsschiene verzichtet werden kann.

Diese Aufgabe wird durch die in Anspruch 1 gekennzeichnete Erfindung gelöst.

Aufgrund der im Rahmen der vorliegenden Erfindung vorgenommene Maßnahme, die erforderliche Führungsschiene im Bereich des die Türscheibe umgebenden Scheibenrahmens anzuordnen, ergibt sich die Möglichkeit,im Bereich des Türkastens auf das Vorsehen einer Führungsschiene zu verzichten, so daß allein im Bereich des Türkastens die erforderlichen Gleitstücke befestigt werden können. Durch die oben im Türkasten angeordneten Gleitstücke ist die Führung im Bereich des kritischen Scheibendurchtritts im Türkörper sehr exakt. Die Befestigung dieser Gleitstücke kann dabei in einer Weise erfolgen, daß eine sehr einfache Justierung der auf diese Weise geführten Türscheibe möglich ist, so daß sich auf diese Weise - selbst bei Vorhandensein relativ großer Fertigungstoleranzen, so wie sie insbesondere bei gekrümmten Glasscheiben auftreten - die Montage der betreffenden Fahrzeugtüre sehr stark vereinfacht.

Vorteilhafte Ausgestaltungen der Erfindung ergeben sich anhand der Unteransprüche.

Im Hinblick auf eine möglichst gute Führung der Türscheibe erweist es sich als zweckmäßig, wenn die Führungsschiene durch ein entsprechendes Profil auf der Innenseite des rückwärtigen Steges des Scheibenrahmens gebildet ist.

Im Hinblick auf eine möglichst einfache Justierbarkeit der Gleitstücke erweist es sich fernerhin als vorteilhaft, wenn jeweils zwei Gleitstücke an einem Gleitstückträger befestigt sind, welcherwiederum unter Einsatz entsprechender Schrauben mit dem Türkasten verbunden ist.

Die beiden Gleitstücke können dabei je nach Wunsch entweder starr oder unter Einsatz von Stiftachsen in gelenkiger Weise an dem Gleitstückträger befestigt sein.

Im Rahmen einer Weiterbildung der Erfindung kann das Teil des Scheibenrahmens bildende Profil der Führungsschiene wahlweise in Form eines Innenprofils oder eine Außenprofils ausgebildet sein, wobei die Gleitstücke in dem einen Fall über einen entsprechenden Schlitz in dieses Innenprofil hineingreifen, bzw. im anderen Fall das betreffende Außenprofil umfassen. Als Möglichkeiten bieten sich dabei für diese Innen- und Außenprofile kreisförmige Querschnitte , X-förmige Querschnitte oder L-förmige Querschnitte an.

Eine in diesem Zusammenhang besondere Schwierigkeit ergibt sich aufgrund der Tatsache, daß im Personenkraftwagenbau die vor den Vordertüren nach oben führenden A-Pfeiler aus stylistischen Gründen in der Regel gerade ausgebildet sind, während die zwischen den Vordertüren und hinteren Türen nach oben führenden B-Pfeiler entsprechend gekrümmt sind, was den Einsatz sphärisch gekrümmter Scheiben im Bereich der vorderen Türen erforderlich macht. Um bei Fahrzeugtüren mit sphärisch gekrümmten Türscheiben zu erreichen, daß im angehobenen Zustand der Türscheiben eine zufriedenstellende Anlage des die Türscheibe umgebenden Scheibenrahmens an der innerhalb der Türöffnung angeordneten Türrahmendichtung zustande kommt, erweist es sich im Rahmen einer Weiterbildung der vorliegenden Erfindung als zweckmäßig, wenn der Gleitstückträger zusätzlich zwei unter einem schrägen Winkel gegeneinander geneigte Verriegelungsbügel trägt, welche in Verbindung mit einem von der Türscheibe bzw. dem Scheibenrahmen getragenen Verriegelungsstück in der vollkommen gehobenen Position der Türscheibe ein Andrücken des Scheibenrahmens an der Türrahmendichtung auslösen.

Ausführungsbeispiele der Erfindung sind in der Zeichnung dargestellt und werden im folgenden näher beschrieben. Es zeigen:

Fig. 1     eine schematische Seitenansicht einer gemäß der Erfindung ausgebildeten Fahrzeugtür,

Fig. 2     eine perspektivische Teilansicht einer ersten Ausführungsform der erfindungsgemäßen Fahrzeugtür,

Fig. 3     eine perspektivische auseinandergezogene Ansicht des Gleitstückträgers bei einer Kraftfahrzeugtür gemäß Fig. 2,

Fig. 4     eine perspektivische Teilansicht einer zweiten Ausführungsform der erfindungsgemäßen Fahrzeugtür und

Fig. 5     eine perspektivische Teilansicht mit Teilvergrößerung eines bestimmten Bauteils einer dritten Ausführungsform der erfindungsgemäßen Kraftfahrzeugtür.

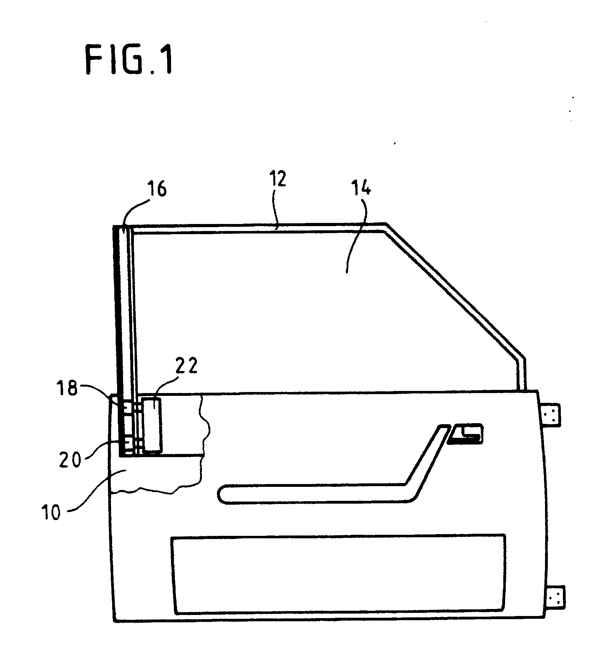

Entsprechend Fig. 1 besteht die erfindungsgemäße Kraftfahrzeugtür aus einem ein Türaußenblech und ein Türinnenblech aufweisenden Türkasten 10, innerhalb welchem eine mit einem Scheibenrahmen 12 versehene Türscheibe 14 unter Einsatz eines nicht dargestellten Scheibenhebers angehoben sowie abgesenkt werden kann.

Gemäß der Erfindung ist der rückwärtige Steg 16 des Scheibenrahmens 12 der Türscheibe 14 als Führungsschiene ausgebildet, welche in zwei Gleitstücke 18, 20 eines Gleitstückträgers 22 zum Eingreifen gelangt, der wiederum unter Einsatz entsprechender Befestigungsmittel an dem Türkasten 10 befestigt ist. Beim Heben und Senken der Türscheibe 14 wird somit der rückwärtige Steg 16 des Scheibenrahmens 12 entlang des mit den beiden Gleitstücken 18, 20 versehenen Gleitstückträgers 22 geführt, so daß das Heben und Senken der Türscheibe 14 im wesentlichen spiel- und flatterfrei durchgeführt werden kann.

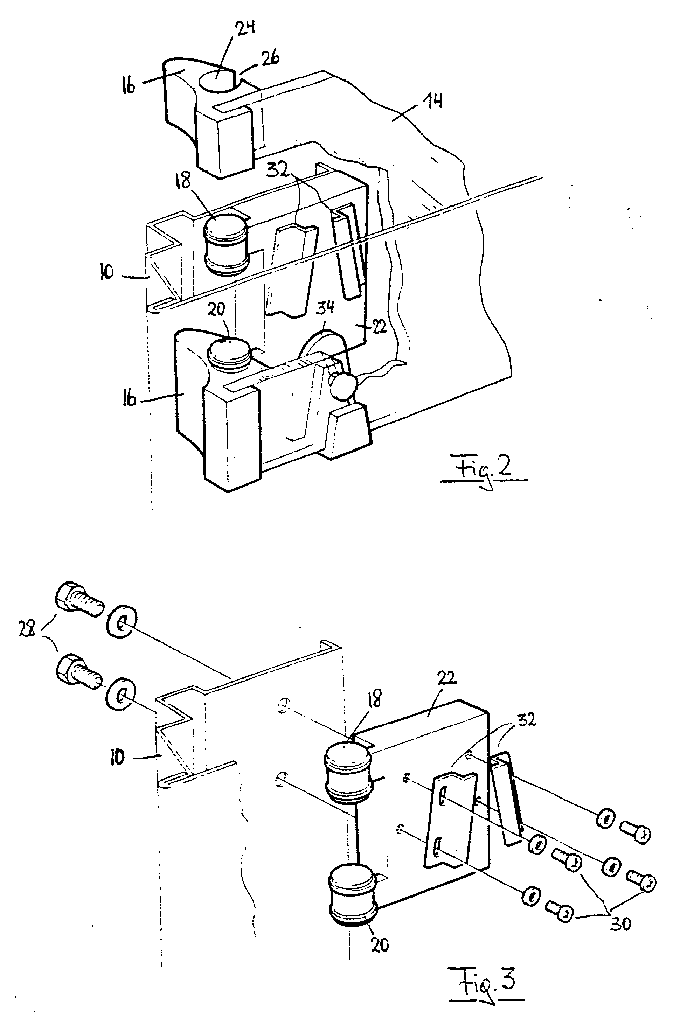

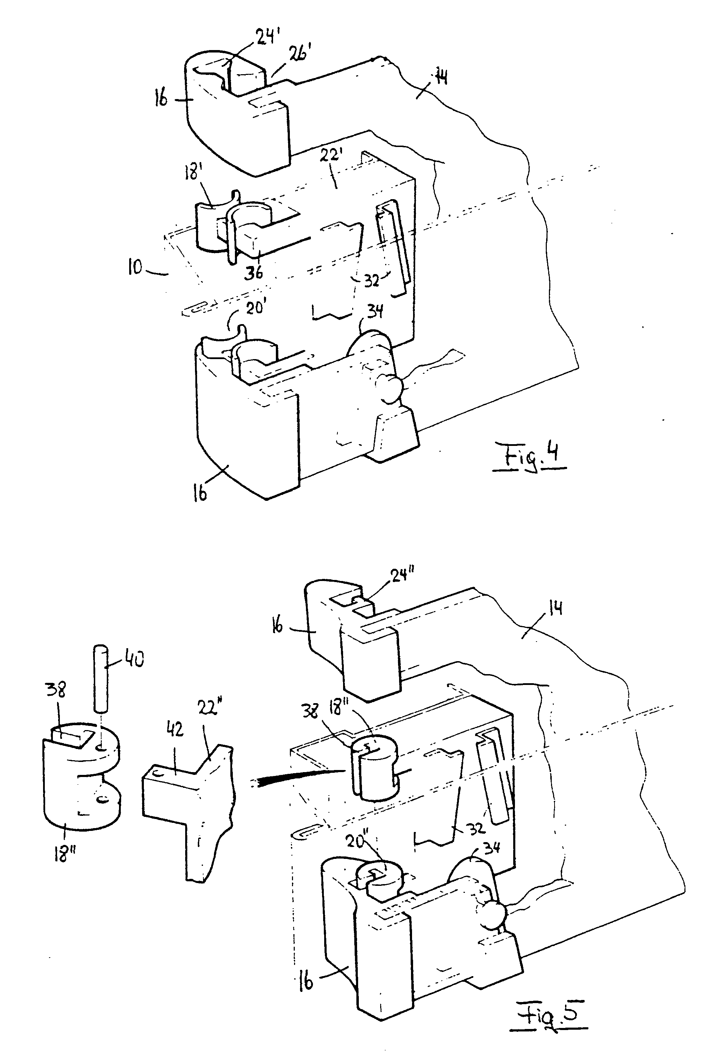

Fig. 2 und 3 zeigen eine erste Ausführungsform der erfindungsgemäßen Kraftfahrzeugtüre, bei welcher der die Führungsschiene 16 bildende rückwärtige Steg 16 des Scheibenrahmens 12 auf der Innenseite mit einem kreisförmigen Innenprofil 24 versehen ist, welches seitlich einen länglichen Schlitz 26 aufweist. Durch diesen Längsschlitz 26 ragen die beiden Gleitstücke 18 und 20 , welche eine zylindrische Form besitzen. Diese beiden zylindrischen Gleitstücke 18, 20 sind dabei einstückig an dem Gleitstückträger 22 angeformt, welcher unter Einsatz entsprechender Bolzen 28 auf der Innenseite des Türkastens 10 befestigt ist.

An dem Gleitstückträger 22 sind unter Ansatz weiterer Schrauben 30 zwei unter einem schrägen Winkel gegeneinander geneigte Verriegelungsbügel 32 befestigt, innerhalb welcher ein V-förmig ausgelegtes Verriegelungsstück 34 zum Einrasten gelangt, sobald die Türscheibe 13 mit Hilfe des nicht dargestellten Scheibenhebers in die voll angehobene Position bewegt worden ist. In dieser Verriegelungsposition wird die Türscheibe 14 einschließlich des sie umgebenden Scheibenrahmens gegen die innerhalb der Türöffnung angeordnete Türrahmendichtung gedrückt, so daß selbst im Falls sphärisch gekrümmter Türscheiben 14 eine gute Abdichtung gegenüber der Türrahmendichtung zustande kommt.

Eine zweite Ausführungsform der erfindungsgemäßen Kraftfahrzeugtüre ist in Fig. 4 gezeigt, bei welcher der die Führungsschiene bildende rückwärtige Steg 16 des Scheibenrahmens 12 auf seiner Innenseite mit einem X-förmigen Innenprofil 24' versehen ist, innerhalb welchem ebenfalls X-förmig ausgebildete Gleitstücke 18', 20' geführt werden, die unter Einsatz L-förmiger Ansätze 36 an dem Gleitstückträger 22' angeformt sind. Der das X-förmige Innenprofil 24' zur Seite hin öffnende Längsschlitz 26' ist dabei in seiner Form an die L-förmigen Ansätze 36 des Gleitstückträgers 22' angepaßt.

Eine dritte Ausführungsform der erfindungsgemäßen Kraftfahrzeugtür ist in Fig. 5 gezeigt. Bei dieser Ausführungsform ist der die Führungsschiene bildende rückwärtige Steg 16 des Scheibenrahmens 12 mit einem L-förmigen Außenprofil 24'' versehen, entlang welchem die ein entsprechendes L-förmiges Innenprofil 38 aufweisenden Gleitstücke 18'', 20'' geführt sind. Diese Gleitstücke 18'', 20'' mit ihren L-förmigen Innenprofilen 38 sind unter Einsatz entsprechender Stiftachsen 40 gelenkig an dem entsprechenden Gleitstückträger 22'' angelenkt, welcher zu diesem Zweck mit entsprechenden Ansätzen 42 versehen ist. Die beiden Gleitstücke 18'' und 20'' besitzen dabei nach außen hin eine in etwa zylindrische Form.

## Patentansprüche

1. Kraftfahrzeugtür, insbesondere für Personenkraftwagen, mit einem aus einem Türaußenblech und einen Türinnenblech bestehenden Türkasten (10) sowie einer von einem Scheibenrahmen (12) umgebenen Türscheibe (14), welche unter Einsatz von Gleitstükken (18, 20) und einer Führungsschiene (16) gegenüber dem Türkasten (10) in vertikaler Richtung verschiebbar ist, dadurch gekennzeichnet, daß der die Türscheibe (14) umgebende Scheibenrahmen (12) die Führungsschiene (16) bildet, während die Gleitstücke (18, 20) stationär an dem Türkasten (10) befestigt sind.

2. Kraftfahrzeugtür nach Anspruch 1, dadurch gekennzeichnet, daß die Führungsschiene durch ein entsprechendes Profil (24) auf der Innenseite des rückwärtigen Steges (16) des Scheibenrahmens (12) gebildet ist.

3. Kraftfahrzeugtür nach Anspruch 1 oder 2, dadurch gekennzeichnet, daß jeweils zwei Gleitstücke (18, 20) an einem Gleitstückträger (22) befestigt sind, welcher wierum unter Einsatz entsprechender Bolzen (28) an dem Türkasten (10) angeschraubt ist.

4. Kraftfahrzeugtür nach Anspruch 3, dadurch gekennzeichnet, daß die beiden Gleitstücke (18, 20) starre Vorsprünge des Gleitstückträgers (22) bilden (Fig. 2 und 4).

5. Kraftfahrzeugtüre nach Anspruch 3, dadurch gekennzeichnet, daß die beiden Gleitstücke (18″, 20″) mit Hilfe von Stiftachsen (40) gelenkig an dem Gleitstückträger (22″) befestigt sind (Fig. 5).

6. Kraftfahrzeugtür nach einem der Ansprüche 3 bis 5, dadurch gekennzeichnet, daß das Teil des Scheibenrahmens (12) bildende Profil der Führungsschiene (16) ein über einen Längsschlitz (26) erreichbares Innenprofil (24) ist, in welchem die beiden ein entsprechendes Außenprofil aufweisenden Gleitstücke (18, 20) geführt sind.

7. Kraftfahrzeugtür nach Anspruch 6, dadurch gekennzeichnet, daß das Innenprofil (24) der Führungsschiene (16) einen kreisförmigen Querschnitt aufweist (Fig. 2).

8. Kraftfahrzeugtür nach Anspruch 6, dadurch gekennzeichnet, daß das Innenprofil (24′) der Führungsschiene (16) einen X-förmigen Querschnitt aufweist (Fig. 4).

9. Kraftfahrzeugtür nach einem der Ansprüche 3 bis 5, dadurch gekennzeichnet, daß das Teil des Scheibenrahmens (12) bildende Profil der Führungsschiene (16) ein vorspringendes Außenprofil (24″) ist, entlang welchem die beiden ein entsprechendes Innenprofil (38) aufweisenden Gleitstücke (18″, 20″) geführt sind.

10. Kraftfahrzeugtür nach Anspruch 9, dadurch gekennzeichnet, daß das vorspringende Außenprofil (24″) der Führungsschiene (16) einen L-förmigen Querschnitt aufweist (Fig. 5).

11. Kraftfahrzeugtür nach einem Ansprüche 3 bis 10, dadurch gekennzeichnet, daß der Gleitstückträger (22) zusätzlich zwei unter einem schrägen Winkel gegeneinander geneigte Verriegelungsbügel (32) trägt, welche in Verbindung mit einem von der Türscheibe (14) bzw. dem Scheibenrahmen (12) getragenen keilförmigen Verriegelungsstück (34) in der vollkommen gehobenen Position der Türscheibe (14) ein Andrücken des Scheibenrahmens (12) an der Türrahmendichtung bewirken.

**Claims**

1. Motor vehicle door, in particular for passenger vehicles, having a door case (10) consisting of an outer door panel and an inner door panel, as well as a door plate (14) which is surrounded by a plate frame (12) and can be displaced with respect to the door case (10) in the vertical direction by using sliding pieces (18, 20) and a guide rail (16), characterised in that the plate frame (12) which surrounds the door plate (14) forms the guide rail (16), whilst the sliding pieces (18, 20) are mounted immovably on the door case (10).

2. Motor vehicle door according to Claim 1, characterised in that the guide rail is formed by a corresponding profile (24) on the inside of the rear web (16) of the plate frame (12).

3. Motor vehicle door according to Claim 1 or 2, characterised in that in each case two sliding pieces (18, 20) are mounted on a sliding piece carrier (22) which in turn is screwed onto the door case (10) using corresponding bolts (28).

4. Motor vehicle door according to Claim 3, characterised in that the two sliding pieces (18, 20) form rigid projections of the sliding piece carrier (22), (Fig. 2 and 4).

5. Motor vehicle door according to Claim 3, characterised in that the two sliding pieces (18″, 20″) are mounted in an articulated manner on the sliding piece carrier (22″) with the aid of pin axles (40).

6. Motor vehicle door according to one of Claims 3 to 5, characterised in that the profile of the guide rail (16) which forms part of the plate frame (12) is an inner profile (24) which can be reached via a longitudinal slot (26), in which inner profile the two sliding pieces (18, 20) having a corresponding outer profile are guided.

7. Motor vehicle door according to Claim 6, characterised in that the inner profile (24) of the guide rail (16) has a circular cross-section (Fig.2).

8. Motor vehicle door according to Claim 6, characterised in that the inner profile (24') of the guide rail (16) has an X-shaped cross-section (Fig. 4).

9. Motor vehicle door according to one of Claims 3 to 5, characterised in that the profile of the guide rail (16) which forms part of the plate frame (12) is a projecting outer profile (24"), along which the two sliding pieces (18", 20") having a corresponding inner profile (38) are guided.

10. Motor vehicle door according to Claim 9, characterised in that the projecting outer profile (24") of the guide rail (16) has an L-shaped cross-section (Fig. 5).

11. Motor vehicle door according to one of Claims 3 to 10, characterised in that the sliding piece carrier (22) additionally bears two locking brackets (32) which are inclined at an oblique angle with respect to one another and which, in conjunction with a wedge-shaped locking piece (34) borne by the door plate (14) or the plate frame (12) respectively, cause the plate frame (12) to press against the door frame seal in the completely raised position of the door plate (14).

## Revendications

1. Porte de véhicule automobile, en particulier pour voitures particulières, comprenant une caisse de porte (10) formé par une tôle extérieure de porte et par une tôle intérieure de porte, ainsi qu'une vitre de porte (14) qui est entourée par un cadre de vitre (12) et qui est mobile en direction verticale par rapport à la caisse de porte (10) au moyen de pièces à coulisse (18, 20) et d'un rail-guide (16), caractérisée en ce que le cadre de vitre (12) entourant la vitre de porte (14) constitue le rail-guide (16), tandis que les pièces à coulisse (18, 20) sont fixées en position fixe sur la caisse de porte (10).

2. Porte de véhicule automobile selon la revendication 1, caractérisée en ce que le rail-guide est constitué par un profil approprié (24) formé sur le côté interne du montant arrière (16) du cadre de vitre (12).

3. Porte de véhicule automobile selon la revendication 1 ou 2, caractérisée en ce que deux pièces à coulisse (18, 20) sont fixées sur un support de pièces à coulisse (22) qui est vissé à son tour, au moyen de boulons appropriés (28), sur la caisse de porte (10).

4. Porte de véhicule automobile selon la revendication 3, caractérisée en ce que les deux pièces à coulisse (18, 20) constituent des saillies rigides du support de pièces à coulisse (22) (fig. 2 et 4).

5. Porte de véhicule automobile selon la revendication 3, caractérisée en ce que les deux pièces à coulisse (18", 20") sont fixées de façon articulée au support de pièces a coulisse (22") au moyen de chevilles (40).

6. Porte de véhicule automobile selon l'une quelconque des revendications 3 à 5, caractérisée en ce que le profil du rail-guide (16) qui fait partie du cadre de vitre (12) est un profil intérieur (24) qui peut être atteint par une fente longitudinale (26) et dans lequel sont guidées les deux pièces à coulisse (18, 20) qui présentent un profil extérieur correspondant.

7. Porte de véhicule automobile selon la revendication 6, caractérisée en ce que le profil intérieur (24) du rail-guide (16) présente une section circulaire (fig. 2).

8. Porte de véhicule automobile selon la revendication 6, caractérisée en ce que le profil intérieur (24') du rail-guide (16) présente une section en X (fig. 4).

9. Porte de véhicule automobile selon l'une quelconque des revendications 3 à 5, caractérisée en ce que le profil du rail-guide (16) qui fait partie du cadre de vitre (12) est un profil extérieur saillant (24"), le long duquel sont guidées les deux pièces à coulisse (18", 20") qui présentent un profil intérieur correspondant (38).

10. Porte de véhicule automobile selon la revendication 9, caractérisée en ce que le profil extérieur saillant (24") du rail-guide (16) présente une section en L (fig. 5).

11. Porte de véhicule automobile selon l'une quelconque des revendications 3 à 10, caractérisée en ce que le support de pièces à coulisse (22) porte en outre deux brides de verrouillage (32) qui sont inclinées l'une par rapport à l'autre en formant un angle entre elles et qui, en combinaison avec une pièce de verrouillage (34) en forme de coin que porte la vitre de porte (14) ou le cadre de vitre (12), font que, dans la position complètement relevée de la vitre de porte (14), le cadre de vitre (12) est appliqué sous pression contre la garniture d'étanchéité du cadre de porte.

# FIG.1

Fig.2

Fig.3

Fig.4

Fig.5